# EUROPÄISCHE PATENTSCHRIFT

(11) **EP 1 660 254 B1**
(45) Veröffentlichungstag und Bekanntmachung des Hinweises auf die Patenterteilung: **23.05.2012**
(21) Anmeldenummer: 04764128.7
(22) Anmeldetag: 14.08.2004
(51) Int. Cl.: B21D 51/22, A47J 36/02, A47J 27/022, A47J 27/00

(54) **VERFAHREN ZUR HERSTELLUNG EINES KOCHGESCHIRRS, INSBESONDERE EINES TOPFES, EINER PFANNE ODER DERGLEICHEN**
METHOD FOR PRODUCING COOKWARE, IN PARTICULAR A POT, PAN OR SIMILAR
PROCEDE POUR PRODUIRE UN USTENSILE DE CUISINE, NOTAMMENT UNE CASSEROLE, UNE POELE OU AUTRE ELEMENT SIMILAIRE

(30) Priorität: 27.08.2003 DE 10339426
(43) Veröffentlichungstag der Anmeldung: 31.05.2006
(73) Patentinhaber: ZWILLING J. A. Henckels Aktiengesellschaft, 42657 Solingen (DE)
(72) Erfinder: DROESE, Joachim, 40764 Langenfeld (DE)
(74) Vertreter: Cohausz Hannig Borkowski Wißgott
(86) Internationale Anmeldenummer: PCT/EP2004/009135
(87) Internationale Veröffentlichungsnummer: WO 2005/021179

(56) Entgegenhaltungen:
- EP-A- 0 525 454
- WO-A-87/04911
- DE-A- 19 649 063
- US-A- 4 204 607
- US-A- 5 532 461

## Beschreibung

Die Erfindung betrifft ein Verfahren zur Herstellung eines aus einem Grundkörper und einem daran angeordneten Boden gebildeten Kochgeschirrs, insbesondere eines Topfes, einer Pfanne oder dergleichen, bei dem in einem ersten Verfahrensschritt der Grundkörper vorzugsweise durch Tiefziehen einstückig ausgebildet und in einem zweiten Verfahrensschritt der Grundkörper mit dem vorzugsweise mehrteiligen, eine Einlage sowie eine die Einlage aufnehmende Kapsel aufweisenden Boden verbunden wird, (siehe z.B. US-A-5 532 461).

Töpfe, Pfannen oder dergleichen Kochgeschirre sind aus dem Stand der Technik dem Grunde nach bekannt und haben sich im alltäglichen Praxiseinsatz bewährt.

An modernes Kochgeschirr werden indes immer höhere Qualitätsanforderungen gestellt, so dass nach wie vor Bedarf an Neuerungen besteht.

So wird an modernes Kochgeschirr nicht nur die Anforderung gestellt, eine Aufbewahrung und Erwärmung von Speisen einwandfrei zu erfüllen, auch muss es hohen Ansprüchen mit Blick auf die Ästhetik gerecht werden, was sich insbesondere auf die Wahl der verwendbaren Materialien auswirkt. Darüber hinaus werden in modernen Küchen unterschiedlichste Herdformen zur Erwärmung von Speisen verwendet, die jeweils unterschiedliche Anforderungen an das Kochgeschirrmaterial stellen. Gängige Herdformen sind beispielsweise der Gasherd, der Elektroherd und der Induktionsherd. Dabei weist im Unterschied zum Gas- oder Elektroherd der Induktionsherd die Besonderheit auf, dass keinerlei Wärmetransfer zwischen Herd einerseits und Kochgeschirr andererseits stattfindet, denn wird hier durch den Aufbau eines Induktionsfeldes das Kochgeschirr direkt erwärmt. Die Verwendung eines Induktionsherdes macht es jedoch erforderlich, dass zumindestens der Boden des mit dem Induktionsherd verwendeten Kochgeschirres aus einem induktionsfähigen Material gebildet ist.

Um den unterschiedlichen Anforderungen an das im Zusammenhang mit Kochgeschirr verwendete Material gerecht zu werden, ist es aus dem Stand der Technik bekannt, Materialkombinationen zu verwenden, wobei es sich insbesondere durchgesetzt hat, unterschiedliche Materialien für den Grundkörper des Kochgeschirrs einerseits und den am Grundkörper angeordneten Boden des Kochgeschirrs andererseits zu verwenden. Auch ist es bekannt, den Boden des Kochgeschirrs als so genannten Sandwich-Boden auszubilden und in Abhängigkeit der gewünschten Materialeigenschaften verschiedenartige Materialschichten vorzusehen. Mit Nachteil hat sich jedoch herausgestellt, dass die Verwendung unterschiedlicher Materialien bei einer gebrauchsgerechten Erwärmung des Kochgeschirrs zu Verzug insbesondere im Bereich des Bodens des Kochgeschirrs führt. Begründet ist dies durch den für die jeweils verwendeten Materialien unterschiedlichen Wärmeausdehnungskoeffizienten, so dass es infolge einer Erwärmung zu materialabhängigen Unterschieden in der Ausdehnung kommt, die in der Konsequenz dazu führen, dass sich einzelne Bereiche des Kochgeschirrs unter Wärmeeinfluss unterschiedlich ausdehnen bzw. zusammenziehen.

Insbesondere bei den so genannten Sandwich-Böden erweist sich dieser Effekt als besonders nachteilig, denn kann infolge der unterschiedlichen Materialausdehnung ein planes Aufliegen des Kochgeschirrbodens auf der Kochstelle des Herdes über den gesamten Temperaturbereich nicht gewährleistet werden. Vielmehr kommt es im Rahmen der Kochgeschirrerwärmung zu einer Verformung des Bodens, die dazu führt, dass der Boden nicht flächig, sondern nur bereichsweise mit der Kochstelle des Herdes in Kontakt steht. Der sich in Abhängigkeit der herrschenden Temperatur einstellende Kontaktbereich zwischen Kochstelle des Herdes und Boden des Kochgeschirrs lässt in nachteiliger Weise den erzielten Wärmetransfer zwischen Herd und Kochgeschirr schwanken, so dass eine genaue Einregulierung der wunschgemäß auf das Kochgeschirr zu übertragenden Wärmemenge nicht möglich ist. Hinzu kommt, dass es bei einem thermisch bedingten Auswölben des Bodens durch ein nur bereichsweises Aufliegen des Kochgeschirrbodens auf der Kochstelle des Herdes begründet zu Kippelbewegungen des Kochgeschirrs gegenüber der Kochstelle kommen kann. Dies ist nicht nur aus sicherheitsrelevanten Aspekten von Nachteil, auch wird der Verwender des Kochgeschirrs auf jeden noch so kleinen thermischen Verzug des Kochgeschirrbodens durch die von ihm wahrnehmbare Kippelbewegung des Kochgeschirrs aufmerksam gemacht, was ihn zurecht an der Qualität des von ihm verwendeten Kochgeschirrs Zweifel lässt. Gleichsam von Nachteil ist eine thermisch bedingte Einwölbung des Bodens, denn bildet sich in diesem Fall ein als Isolator wirkendes Luftpolster zwischen Kochgeschirrboden einerseits und Kochstelle des Herdes andererseits aus, wodurch die wunschgemäße Erwärmung des Kochgeschirrs beeinträchtigt ist.

Die vorbeschriebenen Nachteile wirken sich umso stärker aus, wenn das Kochgeschirr auch im Zusammenhang mit einem Induktionsherd Verwendung finden soll. In diesem Fall ist nämlich der Boden des Kochgeschirrs zumindest teilweise aus einem induktionsfähigen Material zu bilden, was die Vielfalt der miteinander kombinierten Materialien weiter erhöht.

Ausgehend vom Vorbeschriebenen, ist es **Aufgabe** der Erfindung, ein Verfahren zur Herstellung eines Kochgeschirrs anzugeben, das bei gleichzeitig einfacher und wirtschaftlicher Durchführbarkeit die Herstellung eines einen sich auch unter einer vergleichsweise hohen thermischen Belastung nur in engen Toleranzgrenzen verformenden Boden aufweisendes Kochgeschirrs ermöglicht.

Zur **Lösung** dieser Aufgabe wird mit der Erfindung vorgeschlagen ein Verfahren der eingangs genannten Art so zu verbessern, dass der Boden mittels einer Weg-gesteuerten Presseinrichtung, vorzugsweise einer Kniehebelpresse, kalibriert wird.

Die Besonderheit des erfindungsgemäßen Verfahrens liegt in der Kalibrierung des Bodens mittels einer Weg-Gesteuerten Presseinrichtung. Hierdurch wird in Vorteilhafterweise erreicht, dass unabhängig von der aufzuwendenden Kraft eine immer gleiche Ausformung des Bodens erzielt wird. Dies ermöglicht eine Reproduzierbarkeit im engsten Toleranzbereich, denn es wird anders als bei einem Kraft-Gesteuerten Pressvorgang stets die wunschgemäße Formgebung des Bodens erreicht, was insbesondere von Vorteil ist, wenn der Boden des Kochgeschirrs aus unterschiedlichen Materialkomponenten bestehend mehrteilig ausgebildet ist. In der Konsequenz wird unter Anwendung des erfindungsgemäßen Verfahrens ein Kochgeschirrboden ausgebildet, der auch bei einer vergleichsweisen hohen thermischen Belastung einer nur geringen Verformung unterliegt, die einen Wert ≤ 0,7 %, vorzugsweise ≤ 0,35 % des Bodendurchmessers annimmt. Somit kommt es bei einer bestimmungsgemäßen Verwendung eines nach dem Verfahren hergestellten Kochgeschirrs weder zu einer ungewollten Einbeulung, noch zu einer ungewollten Ausbeulung des Bodens.

Damit wird sowohl die Gefahr einer sich infolge einer Ausbeulung des Bodens ergebenden Kippelneigung als auch die Gefahr der sich infolge der Einbeulung des Bodens ausbildenden Luftpolsterisolierung einschließlich der Neigung zum Randbrand in vorteilhafter Weise gebannt. Vielmehr wird infolge der erfindungsgemäß durchgeführten Kalibrierung eine Formgebung des Kochgeschirrbodens erreicht, die dafür Sorge trägt, dass der Kochgeschirrboden bei einer Verwendung im üblichen Temperaturbereich im wesentlichen plan auf der Kochstelle des Herdes aufliegt, wodurch eine optimierte Aufheizung des Kochgeschirrs erreicht werden kann.

Gemäß einem weiteren Vorschlag der Erfindung ist vorgesehen, dass der Boden mechanisch versteift ausgebildet wird. Ergänzend zu der durch die Kalibrierung ausgebildeten Formgebung des Kochgeschirrbodens wird hierdurch eine zusätzliche Formstabilität erzeugt, die in vorteilhafter Weise dazu führt, dass der Boden nahezu über den gesamten Temperaturbereich verzugsfrei bleibt, womit ein planes Aufliegen des Kochgeschirrbodens auf der Kochstelle des Herdes auch bei unterschiedlichen Temperaturen gewährleistet ist. Erhöht wird hierdurch zum einen die Standsicherheit des Kochgeschirrs, zum anderen wird dem Auftreten von durch den Kunden insbesondere als qualitätsmindernd empfundenen Kippelbewegungen des Kochgeschirrs wirksam entgegengewirkt. Dabei ist gemäß einem besonderen Vorschlag der Erfindung vorgesehen, dass in die Unterseite des Kochgeschirrbodens Versteifungsrippen eingepresst werden. Vorzugsweise sind die Versteifungsrippen als zum Grundkörper hin eingewölbte Rillen ausgebildet, die unter Verwendung einer entsprechenden Matrize oder eines entsprechenden Stempels in die Unterseite des Kochgeschirrbodens eingeprägt werden. Dabei kann entsprechend des vorzugsweise verwendeten Prägemusters eine entsprechend ausgebildete Matrize bzw. ein entsprechendes ausgebildeter Stempel verwendet werden, so dass in nur einem Prägeschritt die zur Versteifung des Kochgeschirrbodens vorgesehene Rillen ausgebildet werden.

Um die Reproduzierbarkeit des erfindungsgemäßen Verfahrens zu gewährleisten, ist gemäß einem weiteren Merkmal der Erfindung vorgesehen, dass auch das Einformen der Versteifungsrippen Weg-Gesteuerte durchgeführt wird. Hierdurch wird in vorteilhafter Weise erreicht, dass unabhängig von der aufzuwendenden Kraft eine immer gleiche Ausformung der Versteifungsrippen erzeugt wird. Erreicht wird hierdurch, dass unabhängig von etwaigen Toleranzen der Dicke des Kochgeschirrbodens, das heißt der Einlage oder der Kapsel, immer gleiche Versteifungsrippen ausgebildet werden, so dass nach dem erfindungsgemäßen Verfahren hergestellte Kochgeschirre stets den gleichen Qualitätsansprüchen genügen. Eine Kraft-Gesteuerte Einformung der Versteifungsrippen würde eine Reproduzierbarkeit in diesem Sinne nicht gewährleisten können, denn sind in Abhängigkeit geometrischer Toleranzen, die sich im Zuge der Verfahrensdurchführung zwangsläufig einstellen, zur Einformung der Versteifungsrippen kochgeschirrabhängige Presskräfte aufzubringen, so dass bei einer Kraft-Gesteuerten Verfahrensdurchführung Qualitätsunterschiede in der Ausbildung der Versteifungsrippen entstünden. Um diesem Nachteil entgegenzuwirken und die Reproduzierbarkeit des mit dem erfindungsgemäßen Verfahren hergestellten Kochgeschirrs zu gewährleisten, ist erfindungsgemäß vorgesehen, dass das Einformen der Versteifungsrippen Weg-Gesteuerte durchgeführt wird.

Gemäß einem weiteren Merkmal der Erfindung werden in den Kochgeschirrboden bei gleichzeitiger Kalibrierung die Versteifungsrippen eingeformt. Dabei ist unter Kalibrierung eine Vorformung des Kochgeschirrbodens zu verstehen, gemäß der der Boden bei Raumtemperatur eine leicht nach innen gewölbte, d. h. mit Bezug auf die Unterseite des Bodens konvexe Form, aufweist. Bei einer auf den Kochgeschirrboden einwirkenden erhöhten Temperatur wird sich dieser die Versteifungsrippen unterstützend entgegen der bei Raumtemperatur vorgesehenen Einbeulung ausdehnen, so dass im für die gebrauchsgerechte Verwendung des Kochgeschirrs interessierenden Temperaturbereich der Kochgeschirrboden plan auf der Kochstelle des Herdes aufliegt.

Gemäß einem weiteren Merkmal der Erfindung werden der Grundkörper und der Boden miteinander verschweißt oder verlötet. Insbesondere bietet sich hier in Bezug auf das Verschweißen das so genannte Pressschweißen an. Hierbei werden die miteinander zu verbindenden Teile unter hohem Druck aufeinandergepreßt und gleichzeitig bei Zufuhr entsprechender Energie miteinander stoffschlüssig verbunden. Gemäß alternativer Verfahrensdurchführung kann ein Verbinden von Grundkörper und Boden mittels Löten erfolgen, wobei gemäß dieser Verfahrensdurchführung die miteinander zu verbindenden Komponenten unter vorheriger Zwischenstreuung eines streufähigen Lotes in einem Ofen aufgeheizt werden. Bei einem Verbinden von Boden und Grundkörper mittels Pressschweißen ist gemäß einem besonderen Merkmal der Erfindung vorgesehen, dass das Verbinden von Grundkörper und Boden sowie das Kalibrieren und wahlweise auch das Einformen der Versteifungsrippen in einem Verfahrensschritt durchgeführt werden. Erreicht wird durch diese Maßnahme eine insbesondere kostengünstige und vor allem schnelle Verfahrensdurchführung, denn ist es lediglich erforderlich, den Grundkörper als erstes Bauteil und den Boden als zweites Bauteil zur Verfügung zu stellen und diese dann in nur einem Arbeitsschritt zur Ausbildung des fertigen Kochgeschirrs miteinander zu verbinden.

Falls erforderlich, können nach Fertigstellung des erfindungsgemäßen Kochgeschirrs weitere Verfahrensschritte zur Säuberung, Polierung oder sonstigen Aufbereitung des Kochgeschirrs nachfolgen. Entscheidend ist jedoch, dass in nur einem Verfahrensschritt das erfindungsgemäße Kochgeschirr fertiggestellt werden kann.

Weitere Vorteile und Merkmale der Erfindung ergeben sich aus der nachfolgenden Beschreibung anhand der Figuren. Dabei zeigen:
Fig. 1 : in schematischer Schnittdarstellung eine Ausführungsform des erfindungsgemäßen Kochgeschirrs in Form eines Topfes ;
Fig. 2 : in einer schematischen Ansicht von unten das erfindungsgemäße Kochgeschirr nach Fig. 1 und
Fig. 3 : in einer teilgeschnittenen Seitenansicht das erfindungsgemäße Kochgeschirr während des Pressvorgangs.

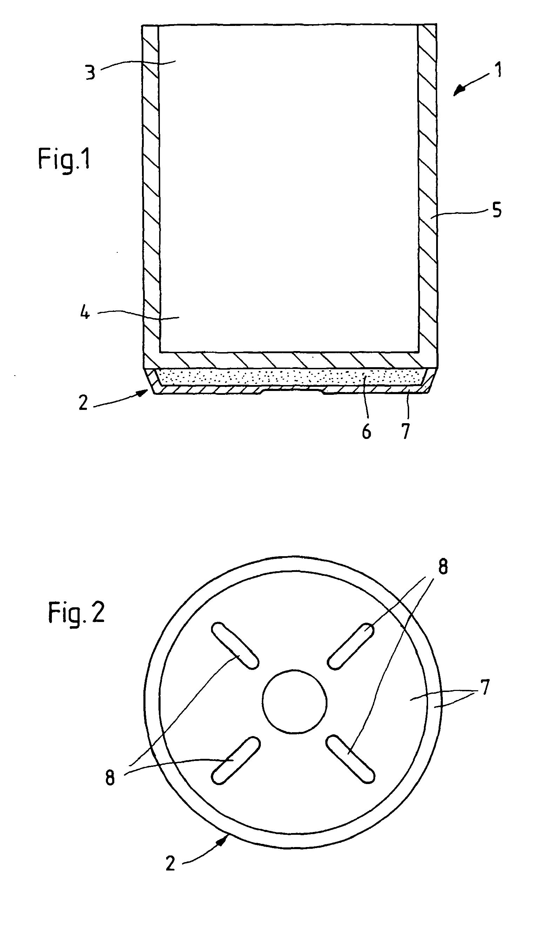

Dargestellt ist in Fig. 1 in teilgeschnittener Seitenansicht das erfindungsgemäße Kochgeschirr in Form eines Topfes 1. Gebildet ist der Topf 1 aus einem Grundkörper 5 und einem Boden 2, die vorzugsweise miteinander verschweißt sind.

Der Grundkörper 5 ist aus einer einen Volumenraum umschließenden Seitenwandung gebildet, die einen ersten und einen dem ersten gegenüberliegenden zweiten Endbereich 4 aufweist, wobei der erste Endbereich 3 offen und durch einen Deckel verschließbar ausgebildet ist. Der zweite Endbereich 4 ist geschlossen ausgebildet und grenzt an den Boden 2 an. Vorzugsweise besteht der Grundkörper 5 aus einem nichtrostenden Metall, beispielsweise Edelstahl.

Der Boden 2 seinerseits ist mehrteilig ausgebildet und weist eine Einlage 6 sowie eine die Einlage 6 aufnehmende Kapsel 7 auf. Gebildet ist die Einlage 6 vorzugsweise aus einem wärmeleitfähigen Material, wie beispielsweise Aluminium. Im Unterschied hierzu ist die die Einlage 6 aufnehmende Kapsel 7 aus einem vorzugsweise magnetisierbaren Material, beispielsweise ferritischem Edelstahl, gebildet, so dass der erfindungsgemäße Topf 1 auch in Kombination mit einem Induktionsherd Verwendung finden kann.

Fig. 2 zeigt den erfindungsgemäßen Topf 1 gemäß Fig. 1 in einer Ansicht von unten. Zu erkennen ist hier, dass der Boden 2 auf seiner dem Grundkörper 5 abgewandten Seite mit Versteifungsrippen 8 versehen ist, die die Form von in den Boden eingeprägten Rillen haben. Durch die Ausbildung der Versteifungsrippen 8 wird eine mechanische Versteifung des Bodens 2 erreicht, die als mechanische Hemmschwelle wirken und eine Erhöhung der Biegesteifigkeit des Bodens 2 zur Folge haben. Die bei einer Erwärmung des Topfes 1 auf Grund der unterschiedlichen Wärmeausdehnungskoeffizienten der verwendeten Materialien auftretenden Wärmespannungen können so kompensiert werden, so dass auch bei hohen thermischen Belastungen des Topfes 1 der Boden 2 nahezu verzugsfrei bleibt. Dies ist nicht nur auf Grund sicherheitsrelevanter Überlegungen von Vorteil, auch kann das Auftreten von Kippelbewegungen unterbunden werden, wie dies ansonsten bei einem nicht verzugsfrei ausgebildeten Boden der Fall wäre. Hierdurch bedingt wird bei einer gleichzeitigen Verkürzung der für eine wunschgemäße Aufheizung benötigten Aufheizzeit eine gleichmäßige Erwärmung des Kochgeschirrbodens erreicht.

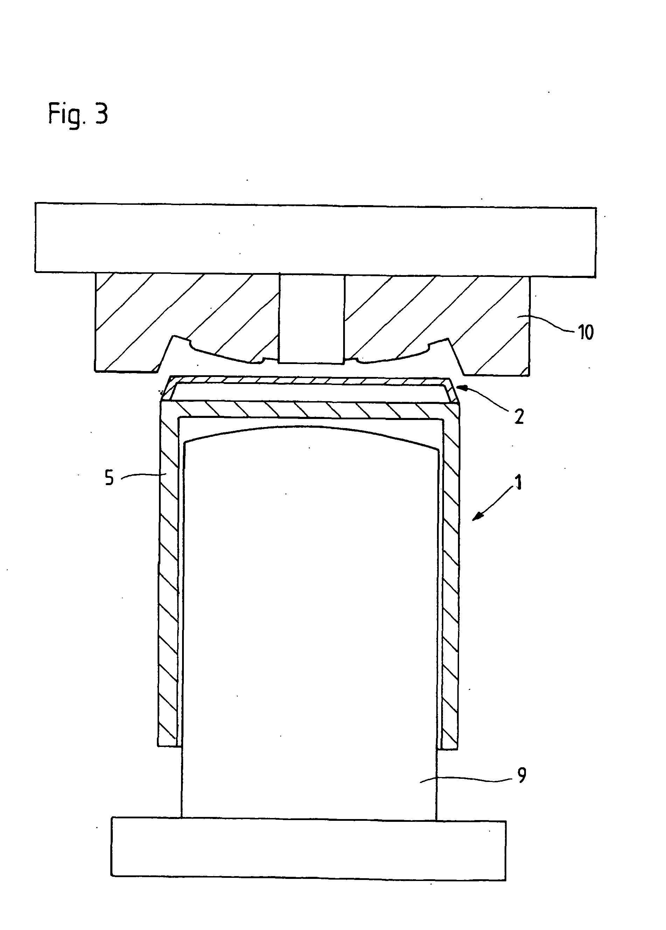

Fig. 3 zeigt in einer schematischen Darstellung die Anordnung des erfindungsgemäßen Topfes 1 in einer im Detail nicht näher dargestellten Presseinrichtung, die die beiden Pressstempel 9 und 10 umfasst. Im Zuge der Verfahrensdurchführung wird der obere Pressstempel 10 Weg-Gesteuerte nach unten in Richtung auf den Pressstempel 9 verfahren. Der zwischen den beiden Pressstempeln befindliche Topf 1 wird dabei im Bereich des Bodens 2 des Topfes 1 zusammengepresst, infolgedessen eine Kalibrierung des Bodens erreicht wird und infolgedessen ergänzend die in Fig. 2 dargestellten Vertiefungsrippen 8 in die Unterseite des Bodens 2 eingeprägt werden. Zu dem Zwecke der Kalibrierung sind die beiden Pressstempel 9 und 10 topfseitig vorzugsweise konkav ausgebildet, so dass der endfertige Topfboden eine nach innen gewölbte, d. h. konvexe Form aufweist.

## Patentansprüche

1. Verfahren zur Herstellung eines aus einem Grundkörper und einem daran angeordneten Boden gebildeten Kochgeschirrs, insbesondere eines Topfes, einer Pfanne oder dergleichen, bei dem in einem ersten Verfahrensschritt der Grundkörper vorzugsweise durch Tiefziehen einstückig ausgebildet und in einem zweiten Verfahrensschritt der Grundkörper mit dem vorzugsweise mehrteiligen, eine Einlage sowie eine die Einlage aufnehmende Kapsel aufweisenden Boden verbunden wird, **dadurch gekennzeichnet, dass** der Boden mittels einer Weg-gesteuerten Presseinrichtung, vorzugsweise einer Kniehebelpresse, kalibriert wird.

2. Verfahren nach Anspruch 1, **dadurch gekennzeichnet, dass** der Boden mechanisch versteift ausgebildet wird.

3. Verfahren nach Anspruch 2, **dadurch gekennzeichnet, dass** in die Unterseite des Bodens Versteifungsrippen eingepresst werden.

4. Verfahren nach Anspruch 3, **dadurch gekennzeichnet, dass** das Einpressen der Versteifungsrippen Weg-gesteuert durchgeführt wird.

5. Verfahren nach einem der Ansprüche 1 bis 4, **dadurch gekennzeichnet, dass** eine Kalibrierung des Bodens bei gleichzeitiger Einformung der Versteifungsrippen durchgeführt wird.

6. Verfahren nach einem der Ansprüche 1 bis 5, **dadurch gekennzeichnet, dass** der Grundkörper und der Boden miteinander verschweißt oder verlötet werden.

7. Verfahren nach einem der Ansprüche 1 bis 6, **dadurch gekennzeichnet, dass** das Verbinden von Grundkörper und Boden einerseits sowie das Kalibrieren des Bodens andererseits in einem Verfahrensschritt durchgeführt wird.

## Claims

1. Method of producing a cooking utensil formed of a body and a bottom arranged thereon, in particular a pot, pan or the like, in which, in a first step, the body is formed in one piece, preferably by deep-drawing, and, in a second step, the body is joined to the preferably multi-part bottom comprising an inlay and a shell encapsulating the inlay, **characterised in that** the bottom is calibrated by means of a position-controlled pressing device, preferably a toggle press.

2. Method according to claim 1, **characterised in that** the bottom is mechanically stiffened.

3. Method according to claim 2, **characterised in that** stiffening ribs are stamped into the underside of the bottom.

4. Method according to claim 3, **characterised in that** the stiffening ribs are stamped in a position-controlled manner.

5. Method according to one of claims 1 to 4, **characterised in that** the bottom is calibrated while the stiffening ribs are being formed.

6. Method according to one of claims 1 to 5, **characterised in that** the body and the bottom are welded or soldered together.

7. Method according to one of claims 1 to 6, **characterised in that** the body and the bottom are joined together and the bottom is calibrated in one single step.

## Revendications

1. Procédé de fabrication d'un élément de batterie de cuisine, en particulier d'une casserole, d'une poêle ou analogues, formé d'un corps de base et d'un fond disposé sur ce dernier, dans lequel le corps de base est réalisé d'une seule pièce, de préférence par emboutissage, dans une première étape de procédé et le corps de base est assemblé avec le fond, de préférence en plusieurs parties, pourvu d'une garniture ainsi que d'une capsule recevant la garniture, dans une seconde étape de procédé, **caractérisé en ce que** le fond est calibré au moyen d'un dispositif de compression à contrôle de course, de préférence d'une presse à genouillère.

2. Procédé selon la revendication 1, **caractérisé en ce que** le fond est renforcé mécaniquement.

3. Procédé selon la revendication 2, **caractérisé en ce que** des nervures de renforcement sont empreintes dans le côté inférieur du fond.

4. Procédé selon la revendication 3, **caractérisé par** une réalisation à contrôle de course de l'empreinte des nervures de renforcement.

5. Procédé selon l'une des revendications 1 à 4, **caractérisé en ce qu'**un calibrage du fond est réalisé lors du formage simultané des nervures de renforcement.

6. Procédé selon l'une des revendications 1 à 5, **caractérisé en ce que** le corps de base et le fond sont soudés ou brasés entre eux.

7. Procédé selon l'une des revendications 1 à 6, **caractérisé en ce que** l'assemblage du corps de base et du fond, d'un côté, ainsi que le calibrage du fond, de l'autre côté, sont réalisés dans une étape de procédé.
